Europäisches Patentamt

European Patent Office

Office européen des brevets

(19)

(11) Publication number: **0 181 096**
**B1**

(12) **EUROPEAN PATENT SPECIFICATION**

(45) Date of publication of patent specification: **22.06.88**

(51) Int. Cl.⁴: **C 10 G 47/16, B 01 J 29/04**

(21) Application number: **85307243.7**

(22) Date of filing: **10.10.85**

(54) Hydrocracking catalyst compostion and hydrocracking process using same.

(30) Priority: **25.10.84 US 664827**

(43) Date of publication of application:
**14.05.86 Bulletin 86/20**

(45) Publication of the grant of the patent:
**22.06.88 Bulletin 88/25**

(84) Designated Contracting States:
**BE DE FR GB IT NL SE**

(56) References cited:
**EP-A-0 055 046**
**EP-A-0 073 482**
**EP-A-0 073 483**
**EP-A-0 095 303**
**US-A-4 268 420**
**US-A-4 431 518**
**US-E- 28 341**

(73) Proprietor: **MOBIL OIL CORPORATION**
**150 East 42nd Street**
**New York New York 10017 (US)**

(72) Inventor: **Chen, Nai Yuen**
**Forrest Central Drive**
**RD Titusville New Jersey 08560 (US)**
Inventor: **Huang, Tracy Jau-Hua**
**9 Woodfield Lane**
**Lawrenceville New Jersey 08648 (US)**

(74) Representative: **West, Alan Harry**
**Mobil Court 3 Clements Inn**
**London WC2A 2EB (GB)**

Courier Press, Leamington Spa, England.

## Description

This invention relates to a hydrocracking catalyst composition and hydrocracking process using same.

Zeolite Beta is one of a number of synthetic crystalline zeolites discovered in recent years which, in the as-synthesized state, can have a silica to alumina ratio greater than 10. The synthesis and characteristics, including its X-ray diffraction pattern, are described in U.S.—A—28,341 to Wadlinger et al. The use of Zeolite Beta for the hydroconversion of hydrocarbons has been described in several patents. For example, U.S.—A—3,923,641 describes the hydrocracking of $C_5+$ naphthas with high selectivity for isobutane. U.S.—A—4,428,819 discloses a process for hydrofinishing a hydrodewaxed oil over Zeolite Beta. U.S.—A—4,419,220 discloses a process for dewaxing a feedstock containing straight chain paraffins over Zeolite Beta. All of these processes utilize a catalyst that contains a hydrogenation component.

Among the hydroconversion processes, catalytic hydrocracking is a petroleum refining process of increasing importance due to the similarly rapid increase in the demand for middle-distillate fuels. In general the process comprises converting heavy petroleum feedstocks, a substantial fraction or all of which boil above 371°C (700°F) at atmospheric pressure, to lower-boiling products in the range of 149 to 371°C (300°F to 700°F), e.g. to gasoline, petrochemical naphthas, furnace oil, and diesel and turbine fuels. The catalysts employed are of the dual functional type and comprise a hydrogenation-dehydrogenation component, such as a Group VIII noble metal, or a combination of Group VIII and Group VIA metal, in combination with a solid acid support, such as silica-alumina or an aluminosilicate, which is the acidic cracking component.

Of the solid acid components, it is generally considered that zeolitic aluminosilicates are the most active in the sense that they convert the highest fraction of feedstock to products under reasonable operating conditions. However, activity is only one requirement. Equally important is stability, which is a measure of the useful operating life of the catalyst. To achieve reasonable catalyst stability in a hydrocracking operation, it has been heretofore necessary to operate at relatively high hydrogen pressures, e.g. at pressures of 10343 to 27580 kPa (1500 to 4000 psi).

It is an object of this invention to provide a novel hydrocracking catalyst composition of improved stability such that heavy hydrocarbon feeds can be hydrocracked at reduced hydrogen pressure as compared with the prior art.

Accordingly, the invention resides in one aspect in a hydrocracking catalyst composition comprising a hydrogenation component, a crystalline aluminosilicate zeolite cracking component having the X-ray diffraction pattern of Zeolite Beta, said crystalline aluminosilicate being further characterized by the presence of 0.1 wt% to 4.0 wt% of framework boron and a silica to alumina ratio of at least about 35, and a solid source of alumina.

In a further aspect, the invention resides in a hydrocracking process for converting a heavy hydrocarbon feed to liquid products boiling in the range of $C_5+$ to 371°C (700°F), which process comprises contacting said feed and gaseous hydrogen at elevated temperature and pressure with the hydrocracking catalyst composition of said one aspect of the invention.

The catalyst of the invention is therefore a composite of at least three components: Zeolite Beta that contains at least 0.1 wt%, preferably at least 0.5 wt%, and up to 4.0 wt% of framework boron; a solid source of alumina; and a hydrogenation component.

It is well known that the crystalline zeolites, including Zeolite Beta, have a structure comprising a porous robust framework, which is composed principally of silicon tetrahedrally coordinated and interconnected with oxygen bridges. A minor amount of an element (aluminum in the case of ordinary Zeolite Beta) is also coordinated and part of the robust framework. The zeolite also contains, but not as part of the framework, material in the pores of the structure. This pore material may be cations such as protons, with or without other cations and sorbed substances. The term "framework" boron is used herein to distinguish between material in the framework of the zeolite, which is evidenced by contributing ion exchange capacity to the zeolite, from material which is in the pores and which has no effect on total ion-exchange capacity.

Methods for preparing high silica content zeolites that contain framework boron are known. Illustrative of such preparations is U.S.—A—4,269,813. The amount of boron contained in the zeolite usually may be made to vary by incorporating different amounts of borate ion in the zeolite forming solution. By way of illustration, a boron-containing Zeolite Beta was prepared from a forming solution that included boric acid. This material was calcined in air and converted to the ammonium form by exchanging the calcined base with $NH_4NO_3$ solutions at an adjusted solution pH of 9 to 10 range. The water washed and dried $NH_4$ form was found to have the X-ray diffraction pattern of Zeolite Beta and the following elemental analysis:

| | |
|---|---|
| $SiO_2$ | 79.2% weight |
| $Al_2O_3$ | 0.72% weight |
| $B_2O_3$ | 3.28% weight |
| Na | 0.02% weight |
| N | 1.14% weight |
| Ash | 82.4% weight |

**0 181 096**

The principal lines and their relative intensities (R.I.) in the X-ray diffraction pattern for Zeolite Beta are given below in Table I.

TABLE I
Zeolite Beta

| d-Spacing (A.U.) | R.I. |
|---|---|
| 11.5 ±0.3 | M—S |
| 7.4 ±0.2 | W |
| 6.6 ±0.15 | W |
| 4.15±0.10 | W |
| 3.97±0.10 | VS |
| 3.00±0.07 | W |
| 2.05±0.05 | W |

The Zeolite Beta used herein contains 0.1 to 4.0 wt% framework boron, and in addition may contain some framework alumina, such that it has a silica to alumina molar ratio greater than 35, preferably greater than about 100.

The preferred solid source of alumina in the catalyst composite of the invention is an aluminum oxide, more preferably alpha-alumina monohydrate. It is contemplated that other solid sources of alumina also may be used such as amorphous silica-alumina and clays such as montmorillonite. The amount of the solid source of alumina is not believed to be critical and the final catalyst composition may contain Zeolite Beta and a source of alumina in the weight ratios of 10:1 to 1:10, respectively. The solid source of alumina may serve as binder for the zeolite component, in which case the preferred weight ratios of Zeolite Beta and solid source of alumina are from 2:3 to 3:1, respectively.

The hydrogenation component preferably comprises at least one transition metal which is selected from Group VIII of the Periodic Table. If a second metal is used, it is selected from Groups IVB, VIA, VIIA, and VIII of the Periodic Table. The Periodic Table referred to herein is that published by Fischer Scientific Company, Copyright 1978, and listed as Catalog No. 5-702-10. Typical examples of hydrogenation components are Pt, Pd, Ru, NiW, CoMo, NiMo, PtRe, PtGe and PtSn.

The hydrogenation component preferably includes a Group VIII noble metal, particularly platinum or palladium, which metal may be present in an amount of 0.2 to 2.5 wt% of the final catalyst composition. When the feedstock being hydrocracked contains more than about 1.0 weight percent sulfur, the hydrogenation component is preferably a combination of a Group VIII non-noble metal and a Group VIA metal, preferably molybdenum, tungsten, nickel and cobalt. Such hydrogenation metal components are usually present in the final catalyst composition as oxides, or more preferably as sulfides when such compounds are readily formed from the particular metal involved. Preferred overall catalyst compositions contain in excess of about 5 weight percent, preferably 5 to 40 weight percent molybdenum and/or tungsten, and at least 0.5 and generally 1 to 15 weight percent of nickel and/or cobalt determined as the corresponding oxides. The sulfide form of these metals is most preferred due to higher activity, selectivity and activity retention.

The hydrogenation component is incorporated into the overall catalyst composition by any one of numerous procedures. It can be added either to the zeolite or to the solid source of alumina or to a combination of both. In the alternative, the Group VIII component can be added to the zeolite by co-mulling, impregnation, or ion exchange, and the Group VIA components, e.g. molybdenum and tungsten, can be combined with the solid source of alumina by impregnation, co-mulling or co-precipitation.

Although each hydrogenation component may be combined with the catalyst support as the sulfide, this is generally not the case. It is usually added as a metal salt which can be thermally converted to the corresponding oxide in an oxidizing atmosphere or reduced to the metal with hydrogen or other reducing agent. The composition can then be sulfided by reaction with a sulfur donor such as carbon bisulfide, hydrogen sulfide, hydrocarbon thiols or elemental sulfur.

The zeolite component should comprise at least 10 weight percent of the final catalyst composition (on anhydrous basis), and preferably about 30 to 85 wt%. The zeolite constituent may be employed as the sole acidic constituent, or it may be used in combination with any of the solid acid catalysts components (such as silica-alumina) which are known to be useful in hydrocracking catalysts.

In a preferred embodiment, a boron-containing high $SiO_2/Al_2O_3$ Zeolite Beta is activated by mulling the zeolite with alpha-alumina monohydrate. The mixture is then extruded, dried, calcined in $N_2$ and then in air,

3

and exchanged with ammonium ions to reduce its sodium content. Finally, a hydrogenation component is incorporated with the catalyst either by ion exchange or by impregnation, followed by calcination in air in the temperature range of 460—593°C (550°F—1200°F). The catalyst is reduced in hydrogen and presulfided before use.

The catalyst described above is advantageously employed in a hydrocracking process with a heavy hydrocarbon feed. In such a process, the catalyst exhibits unexpectedly good stability in low pressure operation such as at a pressure in the range of 791 to 6996 kPa (100 to 1000 psig). A preferred pressure range is 2170 to 5272 kPa (300 to 750 psig).

The hydrocarbon feedstocks advantageously used in the hydrocracking process of this invention are heavy oils, a substantial fraction or all of which boils above 371°C (700°F). At least about 70 percent of the feed will generally boil between 343° and 566°C (650° and 1050°F). Feedstocks having these characteristics include gas oils, vacuum gas oils, topped crudes, deasphalted residua, catalytic cracking cycle stocks, shale oil, tar sand oil and coal tar liquids. The feed to the hydrocracking zone generally contains at least about 5 ppm and usually between 10 ppm and 0.1 weight percent nitrogen as organic nitrogen compounds. It may also contain substantial amounts of mono- or polynuclear aromatic compounds corresponding to at least about 5 and generally 5 to 40 volume percent aromatics. Reaction temperatures exceed 260°C (500°F), and are usually above 316°C (600°F), preferably between 316° and 482°C (600° and 900°F). Hydrogen addition rates should be at least 71.2 Nm$^3$/m$^3$ (400 SCF/B) and are usually between 356 and 2670 Nm$^3$/m$^3$ (2000 and 15000 standard cubic feet per barrel). Reaction pressure exceeds 791 kPa (100 psig) and preferably is within the range of 2170 to 5272 kPa (300 to 750 psig). Contact times usually correspond to liquid hourly space velocities normally employed in fixed bed catalytic systems, namely less than 15 and preferably between 0.2 and 4.

A feature of the hydrocracking process of this invention is that it is naphtha directive, i.e. the fraction of hydrocracked product boiling in the C$_5$—166°C (C$_5$—330°F) range is higher than expected with conventional Zeolite Beta catalysts. However, a major fraction of the total hydrocracked products remains in the 166°C+ distillate (330° F+ distillate) range. Another advantageous feature of the invention is that the pour point of the distillate fraction is substantially less than that of the feed. In addition, the conversion occurs with increased catalyst life compared with an otherwise similar process operating under comparable conditions but in which a conventional Zeolite Beta is used as the zeolite component. It is a feature of this invention that the refiner may choose to forego some or all of the extended catalyst life in favor of operating at substantially lower pressure, which is of considerable economic advantage. Which option or combination is chosen will of course depend on circumstances, such as whether a new installation is considered.

As with other hydrocracking processes, the feed to the process of this invention may be hydrotreated in a conventional hydrotreating step before being hydrocracked. High pressure hydrotreating may be practiced. In some instances a low pressure hydrotreating may be employed, and the product cascaded to the hydrocracking process of this invention.

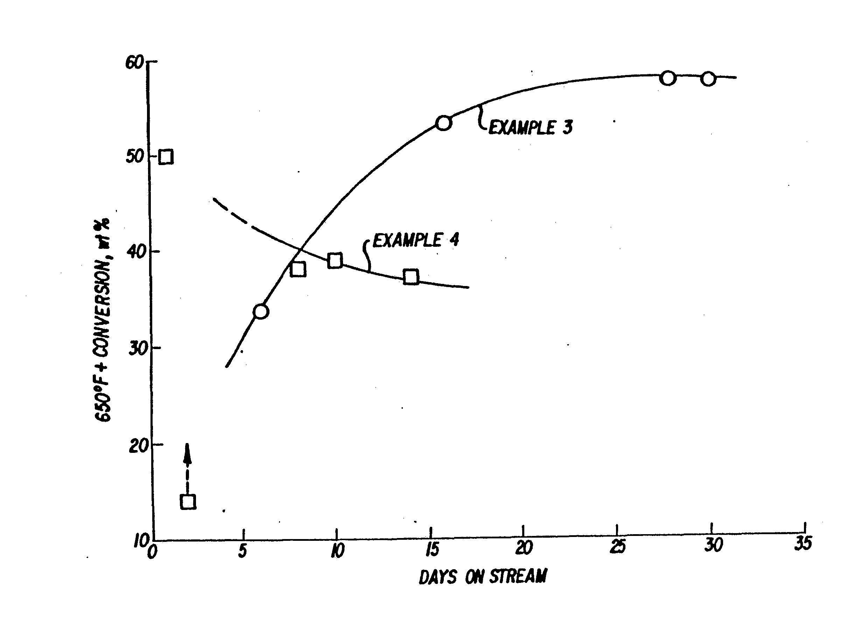

This invention will now be illustrated by the following Examples and the accompanying drawing which compares graphically the aging rate of the catalyst composition of example with a similar catalyst composition but using boron-free Zeolite Beta.

Example 1

An as-synthesized boron-containing Zeolite Beta characterized by the molar ratios SiO$_2$/Al$_2$O$_3$=145, and SiO$_2$/B$_2$O$_3$=29.6, was mulled and extruded with alumina in a zeolite:alumina weight ratio of 65:35, dried, and calcined at 538°C (1000°F) in N$_2$ for 3 hours and then in air for another 3 hours. The resulting extrudate was exchanged twice with 1N NH$_4$NO$_3$ solution at room temperature for 1 hour, then exchanged with Pt(NH$_3$)$_4$(NO$_3$)$_2$ solution at room temperature for 5 hours, and finally calcined in air at 349°C (660°F) for 3 hours. This finished catalyst contained 0.6% Pt and is designated as Catalyst A.

Example 2

A 0.6% Pt/Zeolite Beta/Al$_2$O$_3$ extrudate catalyst was prepared using the same procedures described in Example 1 except that an as-synthesized boron-free Zeolite Beta (SiO$_2$/Al$_2$O$_3$=40) was used and the zeolite:alumina weight ratio was 50:50. This catalyst is designated as Catalyst B.

Example 3

Prior to catalytic testing, Catalyst A was presulfided overnight at 371°C (700°F) with H$_2$ gas containing 2% H$_2$S. The feed, a Minas gas oil [288—538°C (550°—1000°F), 41°C (105°F) pour point] was processed, in a fixed-bed reactor at 2598 kPa (400 psig), 1 LHSV and 445 Nm$^3$/m$^3$ (2500 SCF/B) H$_2$ circulation and a temperature of 432°C. The results are given in Table II.

TABLE II

| Time on stream, days | 6 | 16 | 30 |
|---|---|---|---|
| 343°C+ (650° F+) conversion, wt% | 33.7 | 53.0 | 57.6 |
| Pour point of 355°C (330° F+) distillate, °F (°C) | +79 (+26) | +45 (+7) | +19 (−7) |
| Product distribution, wt% | | | |
| $C_1+C_2$ | 0.4 | 0.3 | 0.3 |
| $C_3+C_4$ | 4.7 | 19.5 | 23.1 |
| $C_5$—330°F (166°C) Naphtha | 9.7 | 21.3 | 24.5 |
| 330° F+ (166°C+) distillate | 85.2 | 58.9 | 52.1 |

Example 4

The same experiment as described in Example 3 was performed, except that Catalyst B was used. The results are given in Table III.

TABLE III

| Time on stream, days | 1 | 2 | 8 | 10 | 14 |
|---|---|---|---|---|---|
| Temp., °F (°C) | 750 (399) | 750 (399) | 800 (427) | 810 (432) | 810 (432) |
| 650° F+ (343°C+) conversion, wt% | 50 | 14 | 38 | 39 | 37 |
| Pour point of 330° F+ (166°C+) distillate, °F (°C) | +55 (+13) | +95 (+35) | +86 (+30) | +83 (+30) | +89 (+32) |
| Product distribution, wt% | | | | | |
| $C_1+C_2$ | 0.3 | 0.2 | 0.4 | 0.5 | 0.5 |
| $C_3+C_4$ | 16.2 | 1.8 | 2.8 | 4.1 | 3.5 |
| $C_5$—330°F (166°C) Naphtha | 26.4 | 5.7 | 8.5 | 10.7 | 10.2 |
| 330° F+ (166°C+) Distillate | 57.4 | 92.3 | 88.4 | 84.7 | 85.8 |

The results of Examples 3 and 4 are compared graphically in the drawing which illustrates the improved activity and stability of the catalyst composition of the invention.

**Claims**

1. A hydrocracking catalyst composition comprising a hydrogenation component, a crystalline aluminosilicate zeolite cracking component having the X-ray diffraction pattern of Zeolite Beta, said crystalline aluminosilicate being further characterized by the presence of 0.1 wt% to 4.0 wt% of framework boron and a silica to alumina ratio of at least about 35, and a solid source of alumina.

2. The catalyst of claim 1 wherein the weight ratio of said solid source of alumina to said zeolite is in the range of 10:1 to 1:10.

3. The composition of Claim 1 or Claim 2 wherein the weight ratio of said zeolite to said solid source of alumina is 2:3 to 3:1.

4. The composition of any preceding claim wherein said solid source of alumina is alpha alumina monohydrate.

5. The composition of any preceding claim wherein said hydrogenation component includes platinum or palladium.

6. A hydrocracking process for converting a heavy hydrocarbon feed to liquid products boiling in the range of $C_5+$ to 371°C (700°F), which process comprises contacting said feed and gaseous hydrogen at elevated temperature and pressure with the hydrocracking catalyst of any preceding claim.

7. The process of claim 6 wherein said elevated pressure is 791 to 6996 kPa (100 to 1000 psig).

8. The process of claim 6 wherein said elevated pressure is 2170 to 5272 kPa (300 to 750 psig).

9. The process of any one of claims 6 to 8 wherein said elevated temperature exceeds 260°C (500°F).

10. The process of any one of claims 6 to 9 wherein said elevated temperature is 316—482°C (600—900°F).

**Patentansprüche**

1. Hydrocrackkatalysatorzusammensetzung, die eine Hydrierungskomponente, einen kristallinen Aluminosilicatzeolith als Crackkomponente mit dem Röntgenbeugungsmuster von Zeolith-Beta, wobei dieses kristalline Aluminosilicat darüberhinaus durch das Vorhandensein von 0,1 Gew-% bis 4,0 Gew-%

## 0 181 096

Bor als Gitterbestandteil und ein Verhältnis Siliciumdioxid zu Aluminiumoxid von mindestens etwa 35 gekennzeichnet ist, und eine feste Aluminiumoxidquelle aufweist.

2. Katalysator nach Anspruch 1, worin das Gewichtsverhältnis der festen Aluminiumoxidquelle zum Zeolith im Bereich von 10:1 bis 1:10 liegt.

3. Zusammensetzung nach Anspruch 1 oder 2, worin das Gewichtsverhältnis des Zeolith zur festen Aluminiumoxidquelle 2:3 bis 3:1 beträgt.

4. Zusammensetzung nach einem der vorstehenden Ansprüche, worin die feste Aluminiumoxidquelle α-Aluminiumoxidmonohydrat ist.

5. Zusammensetzung nach einem der vorstehenden Ansprüche, worin die Hydrierungskomponente Platin oder Palladium umfaßt.

6. Hydrocrackverfahren zur Umwandlung einer schweren Kohlenwasserstoffzufuhr in flüssig Produkte, die im Bereich von $C_5+$ bis 371°C (700°F) sieden, wobei dieses Verfahren den Kontakt der Zufuhr und des gasförmigen Wasserstoffs bei erhöhter Temperatur und erhöhtem Druck mit dem Hydrocrackkatalysator nach einem der vorstehenden Ansprüche umfaßt.

7. Verfahren nach Anspruch 6, worin der erhöhte Druck 791 bis 6996 kPa (100 bis 1000 psig) beträgt.

8. Verfahren nach Anspruch 6, worin der erhöhte Druck 2170 bis 5272 kPa (300 bis 750 psig) beträgt.

9. Verfahren nach einem der Ansprüche 6 bis 8, worin die erhöhte Temperatur 260°C (500°F) übersteigt.

10. Verfahren nach einem der Ansprüche 6 bis 9, worin die erhöhte Temperatur 316 bis 482°C (600 bis 900°F) beträgt.

**Revendications**

1. Une composition de catalyseur d'hydrocraquage comprenant un composant d'hydrogénation, un composant de craquage à base de zéolite d'alumino-silicate cristallin présentant le schéma de diffraction aux rayons-X de la zéolite béta, cet alumino-silicate cristallin étant, en outre, caractérisé par la présence dans son édifice de 0,1 à 4,0% en poids de bore et, par un rapport silice/alumine d'au moins environ 35 et par une source d'alumine solide.

2. Le catalyseur selon la revendication 1 dans lequel le rapport pondéral de cette source d'alumine solide à cette zéolite est compris entre 10/1 et 1/10.

3. La composition selon la revendication 1 ou 2, dans laquelle le rapport pondéral entre cette zéolite et cette source d'alumine solide est compris entre 2/3 et 3/1.

4. La composition selon l'une quelconque des revendications précédentes, dans lequel cette source solide d'alumine est de l'alumine alpha monohydratée.

5. La composition selon l'une quelconque des revendications précédentes dans lequel ce composant d'hydrogénation comrend du platine ou du paladium.

6. Un procédé d'hydrocraquage pour convertir une charge d'hydrocarbures lourde en produits liquides bouillant dans l'intervalle des $C_5+$ à 371°C (700°F), ce procédé consistant à mettre cette charge et de l'hydrogène gazeux au contact, à une température et à une pression élevées, au contact du catalyseur d'hydrocraquage selon l'une quelconque des revendications précédentes.

7. Le procédé selon la revendication 6, dans lequel cette pression élevée est comprise entre 791 et 6996 kPa (100 à 1000 psig).

8. Le procédé selon la revendication 6 dans lequel cette pression élevée est comprise entre 2170 et 5272 kPa (300 et 700 psig).

9. Le procédé selon l'une quelconque des revendications 6 à 8 dans lequel cette température élevée dépasse 260°C (500°F).

10. Le procédé selon l'une quelconque des revendications 6 à 9 dans lequel cette pression élevée est comprise entre 316 et 482°C (600 et 900°F).

6